(19) Europäisches Patentamt
European Patent Office
Office européen des brevets

(11) **EP 3 840 203 A1**

(12) **EUROPÄISCHE PATENTANMELDUNG**

(43) Veröffentlichungstag:
**23.06.2021 Patentblatt 2021/25**

(51) Int Cl.:
**H02M 1/40** *(2007.01)*   **H02M 3/335** *(2006.01)*

(21) Anmeldenummer: **19218597.3**

(22) Anmeldetag: **20.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Erhartt, Lutz**
**1100 Wien (AT)**

(72) Erfinder: **Erhartt, Lutz**
**1100 Wien (AT)**

(74) Vertreter: **Patentanwaltskanzlei**
**Matschnig & Forsthuber OG**
**Biberstraße 22**
**Postfach 36**
**1010 Wien (AT)**

(54) **VERFAHREN ZUR GENERIERUNG ABWECHSELND POSITIVER UND NEGATIVER SPANNUNGSIMPULSE EINER TRANSFORMATORPRIMÄRSPANNUNG**

(57)  Die Erfindung betrifft ein Verfahren zur Generierung abwechselnd positiver und negativer Spannungsimpulse einer Transformatorprimärspannung $u_p(t)$ der Höhe $U^+$ und $U^-$ aus einem von einer Steuerspannung $u_s(t)$ abgeleiteten Impulszug $z(t)$. Es wird die Transformatorprimärspannung $u_p(t)$ erfasst und diese Transformatorprimärspannung zum Magnetisierungsstromsignal $i_m(t)$ integriert wird, welches und eine Abschaltung der Impulse von $z(t)$ wird durch eine Verschneidung einer fallenden Flanke von $i_m(t)$ mit $-u_s(t)$ oder durch eine Verschneidung einer steigenden Flanke von $i_m(t)$ mit $u_s(t)$ festgelegt, oder die Transformatorprimärspannung wird zum Magnetisierungssignal $m(t)=|i_m(t)|$ integriert, wobei während eines Impulses $|u_p(t)|=U^+$ oder $|u_p(t)|=|U^-|$ in die negative Richtung integriert wird bis $m(t)=0$ und von da ab bis Impulsende wieder in die positive Richtung integriert wird, und die Abschaltung der Impulse von $z(t)$ bei Gleichheit von $m(t)=|i_m(t)|$ mit $u_s(t)$ erfolgt, oder es wird in den oben beschriebenen Schritten an Stelle der Transformatorprimärspannung $u_p(t)$ eine rückgekoppelte Transformatorprimärspannung $u_{p,B}(t)$ verwendet, welche beispielsweise an einer oder mehreren in Serie geschalteten Messwindungen um einen Transformatorkern ermittelt wird.

**FIG.3**

Printed by Jouve, 75001 PARIS (FR)

**Beschreibung**

Die Erfindung betrifft ein Verfahren gemäß ein Verfahren zur Generierung abwechselnd positiver und negativer Spannungsimpulse einer Transformatorprimärspannung $u_p(t)$ der Höhe $U^+$ und $U^-$ aus einem von einer Steuerspannung $u_S(t)$ abgeleiteten Impulszug $z(t)$.

Weiters betrifft die Erfindung eine Vorrichtung, insbesondere einen Wechselrichtertrennverstärker zum Durchführen eines solchen Verfahrens.

Außerdem betrifft die Erfindung einen Modulator, insbesondere Pulsdauer- oder Pulsweitenmodulator, insbesondere zur Verwendung in einer vorgenannten Vorrichtung sowie zur Verwendung in einem erfindungsgemäßen Verfahren.

Stand der Technik

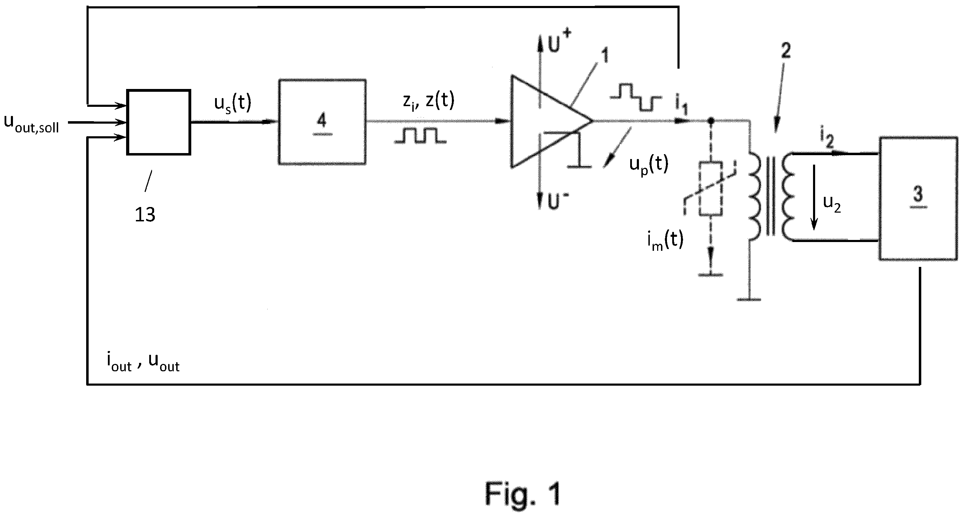

Spannungsgespeiste Wechselrichtertrennverstärker (Fig.1) haben das Sicherheitsproblem, dass der Transformator plötzlich einen sogenannten Sättigungskurzschluss bilden kann. Dieses Problem konnte mit einer primärseitigen Stromerfassung gelöst werden. Dadurch kann eine langsame Regelung der Pulsbreite erfolgen.

Die Patente DE19634713, EP898360 und AT511298 beschreiben Pulsweitenmodulatoren speziell für spannungsgespeiste

Wechselrichtertrennverstärker, die ohne Strommessung dynamische Änderungen der Steuerspannung verarbeiten.

Pulsweitenmodulatoren wandeln eingangsseitig anliegende Steuerspannungswerte $u_s$ in Tastverhältnisse eines ausgegebenen Signalzugs $z$ um, womit der Wechselrichter angesteuert wird. Gewöhnlich wird eine sägezahnförmige Hilfsspannung mit einer Steuerspannung verschnitten, wie in EP898360B, Absätze 17,18,19 beschrieben. Es wird erklärt, warum dynamische Änderungen der Steuerspannung den um die Nulllinie symmetrischen Verlauf des magnetischen Flusses im Transformator stören. Die Abhilfe erfolgt dort mit einem PWM nach Fig.8, der in Absatz 24 beschrieben ist.

Doch ist die Anwendbarkeit dieser Lösungen beschränkt. Schon im stationären Betriebszustand wandert der magnetische Fluss, wenn die Pulsdauern der Transformatorprimärspannung unter anderem zufolge unterschiedlicher Verzögerungszeiten der Leistungsschalter des Wechselrichters nicht genau genug den durch das Signal $z$ vorgegebenen Dauern entsprechen.

Es ist eine Aufgabe der vorliegenden Erfindung, einen Lösungsweg anzugeben, um Fehler auszugleichen, die zu einem gefährlichen Wandern des magnetischen Flusses führen.

Diese Aufgabe wird mit einem eingangs genannten Verfahren sowie einer Vorrichtung zum Durchführen eines solchen Verfahrens dadurch gelöst, dass erfindungsgemäß die Transformatorprimärspannung $u_p(t)$ erfasst und diese Transformatorprimärspannung zum Magnetisierungsstromsignal $i_m(t)$ integriert wird, welches

- zunimmt, wenn $u_p(t)=U^+$, $U^+>0$, und
- abnimmt, wenn $u_p(t)=U^-$, $U^-<0$, und
- sich nicht ändert, wenn $u_p(t)=0$ ist,

und eine Abschaltung der Impulse von $z(t)$ durch eine Verschneidung einer fallenden Flanke von $i_m(t)$ mit $-u_s(t)$ oder durch eine Verschneidung einer steigenden Flanke von $i_m(t)$ mit $u_s(t)$ festgelegt wird,
oder
die Transformatorprimärspannung zum Magnetisierungssignal $m(t)=|i_m(t)|$ integriert wird, wobei während eines Impulses $|u_p(t)|=U^+$ oder $|u_p(t)|=|U^-|$ in die negative Richtung integriert wird bis $m(t)=0$ und von da ab bis Impulsende wieder in die positive Richtung integriert wird, und die Abschaltung der Impulse von $z(t)$ bei Gleichheit von $m(t)=|i_m(t)|$ mit $u_s(t)$ erfolgt,
oder wobei in den oben beschriebenen Schritten an Stelle der Transformatorprimärspannung $u_p(t)$ eine rückgekoppelte Transformatorprimärspannung $u_{p,B}(t)$ verwendet wird, welche beispielsweise an einer oder mehreren in Serie geschalteten Messwindungen um einen Transformatorkern ermittelt wird.

Die Erfindung löst diese Aufgabe mit einem Verfahren zur Pulsweiten-/Pulsdauermodulation, indem die Transformatorprimärspannung $u_p(t)$ integriert wird und die Abschaltung eines Impulses von $z(t)$ bei Gleichheit der Steuerspannung $u_s(t)$ mit dem Integral über $u_p(t)$ erfolgt.

Unterschiedlich zum Stand der Technik wird nicht der Primärstrom an den Regler, sondern die Primärspannung an den Pulsweitenmodulator zurückgeführt.

Vorzugsweise kann vorgesehen sein, dass der Start eines Impulses von $z(t)$ mit einem on-Signal an einem sync-Eingang oder von einem internen sync-Generator (Frequenzgenerator) ausgelöst wird.

Es kann vorgesehen sein, dass von einem Dreieckgenerator eine periodische Hilfsspannung $u_h(t)$ ausgegeben wird, wobei ein Taktintervall $T$ durch eine fallende Flanke, in der $u_h(t)$ von $u_{h,max}$ auf 0 abnimmt und eine steigende Flanke, worin $u_h(t)$ von 0 auf $u_{h,max}$ ansteigt, festgelegt ist, und ein on-Signal, mit welchem der Start eines Impulses von $z(t)$ ausgelöst wird, durch Verschneidung der fallenden Flanke der Hilfsspannung $u_h(t)$ mit der Steuerspannung $u_s(t)$

gewonnen wird.

Dabei kann es zweckmäßig sein, wenn ein Generator fallende und steigende Flanken der Hilfsspannung $u_h(t)$ und ein Signal P erzeugt, indem er in Taktintervallen, in welchen P=1 ist, mit dem Eingang $U^+$ und in den Taktintervallen, in welchem P=0 ist, mit den Eingang $|U^-|$ vom maximalen Ausgangswert $u_{h,max}$ in die negative Richtung bzw. die negative Spannung $-U^+$ oder $U^-$ integriert, und ab Erreichen von $u_h(t)=0$ in die positive Richtung bzw. die positive Spannung $U^+$ oder $|U^-|$ integriert, bis wieder $u_{h,max}$ erreicht ist und vorzugsweise mit einem Wechselrichter, Impulse $u_p(t)=U^+$ eingeschaltet werden, wenn P=1 und $u_p(t)=U^-$ eingeschaltet werden, wenn P=0 ist.

Beispielsweise kann vorgesehen sein, dass, vorzugsweise von einem Dreieckgenerator, eine periodische Hilfsspannung $u_h(t)$ ausgegeben wird, und ein Taktintervall T vorgegeben wird durch das alternierende Ansteigen der Hilfsspannung von $-u_{h,max}$ auf $+u_{h,max}$ und Abfallen von $u_{h,max}$ auf $-u_{h,max}$, und ein on-Signal, mit welchem der Start eines Impulses von z(t) ausgelöst wird, durch Verschneidung einer fallenden Flanke der Hilfsspannung $u_h(t)$ mit der Steuerspannung $u_s(t)$ und durch Verschneidung einer steigenden Flanke der Hilfsspannung $u_h(t)$ mit der invertierten Steuerspannung $-u_s(t)$ gewonnen wird.

Beispielsweise kann vorgesehen sein, dass - vorzugsweise von einem Generator - eine steigende Flanke einer Taktperiode der Hilfsspannung $u_h(t)$ mittels Integration, insbesondere von $-u_{h,max}$ auf $u_{h,max}$, der Versorgungsspannung $U^+$ erzeugt wird und eine fallende Flanke einer Taktperiode der Hilfsspannung $u_h(t)$ mittels Integration, insbesondere von $u_{h,max}$ auf $-u_{h,max}$, der Versorgungsspannung $U^-$ erzeugt wird, und ein zweites Signal P ausgegeben wird, wobei P=1 während der steigenden und P=0 während der fallenden Flanken von $u_h(t)$ ist, und, vorzugsweise mit einem Wechselrichter, Impulse $u_p(t)=U^+$ eingeschaltet werden, wenn P=1 und die Impulse $u_p(t)=U^-$ eingeschaltet werden, wenn P=0 ist.

Die erfindungsgemäße Vorrichtung umfasst vorzugsweise

- Versorgungsspannungen $U^+$ und $U^-$ oder eine Versorgungsspannung U, die durch Gleichrichtung einer Netzwechselspannung erzeugt werden können,

- einen Wechselrichterverstärker, angeschlossen an Masse, U+ und U-, wobei der Wechselrichterverstärker alternativ als Umpoler, z.B. als Vollbrückenwechselrichter ausgeführt sein kann, der U abwechselnd in positiver und negativer Richtung ausgibt, mit einer Ausgangsgröße $u_p(t)$,

- einen Transformator, dessen Primärwicklung an den Ausgang $u_p(t)$ von Wechselrichter angeschlossen ist,

- eine Last, die von einer Sekundärspannung des Transformators versorgt wird,

- Mittel zur Erfassung von Ausgangsgrößen $u_{out}$ und/oder $i_{out}$,

- Mittel zur Erzeugung einer Sollspannung $u_{out,soll}$,

- einen Regler/Begrenzer, der aufgrund der Ausgangsgrößen $u_{out}$ und/oder $i_{out}$ und der Sollspannung $u_{out,soll}$ die Steuerspannung $u_s$ erzeugt,

- einen Modulator, dessen Ausgang z(t) von Wechselrichter zur Primärspannung up(t) verstärkt wird,
  wobei die Vorrichtung weiters umfasst

- Mittel zur Erfassung einer Transformatorprimärspannung $u_p(t)$ und/oder einer rückgekoppelten Transformatorprimärspannung $u_{p,B}(t)$,

- sowie Mittel zur Integration der Transformatorprimärspannung oder der rückgekoppelten Transformatorprimärspannung zum Magnetisierungsstromsignal $i_m(t)$, oder Mittel zur Integration der Transformatorprimärspannung oder der rückgekoppelten Transformatorprimärspannung zum Magnetisierungssignal $m(t)=|i_m(t)|$, und
  einen Modulator, der durch einen Pulsweiten- bzw. Pulsdauermodulator, beispielsweise durch einen nachstehend beschriebenen Pulsweiten- bzw. Pulsdauermodulator gebildet ist.

Vorzugsweise sind die Mittel zur Integration Bestandteil des Pulsweiten- oder Pulsdauermodulators.

Der Modulator, insbesondere Pulsdauer- oder Pulsweitenmodulator, umfasst beispielsweise Mittel zur Integration einer Transformatorprimärspannung $u_p(t)$ zum Magnetisierungsstromsignal $i_m(t)$, etwa in Form eines Integrators, oder Mittel zur Integration der Transformatorprimärspannung zum Magnetisierungssignal $m(t)=|i_m(t)|$, etwa in Form eines Integrators, wobei die Integration vorzugsweise in einem Hilfsspannungsgenerator erfolgt.

Dabei kann vorgesehen sein, dass während eines Impulses von $u_p(t)$ der Integrator dazu eingerichtet ist, ein

Signal $i_m(t) = u_{h,b}(t-T_{v,on})$ auszugeben oder der Integrator dazu eingerichtet ist, ein Signal $m(t) = u_{h,u}(t-T_{v,on})$ auszugeben, wobei $-u_{h,max} < u_{h,b} < u_{h,max}$ und $0 < u_{h,u} < u_{h,max}$ und in einer Pulspause von $u_p(t)$ der Integrator den Wert $i_m(t) = u_{h,b}(t_{v,off,B}-T_{v,on})$ oder der Integrator den Wert $m(t) = u_{h,u}(t_{v,off,B}-T_{v,on})$ ausgibt.

Bei $u_{h,b}$ (D1, Fig. 2) und $u_{h,u}$ (D11, Fig. 7) handelt es sich dabei um jene dreieckförmigen Hilfsspannungen $u_h(t)$ in D1 und D11, die in bekannten Pulsmodulatoren eingesetzt werden oder um weitestgehend dreieckförmige Hilfsspannungen $u_h(t)$ in D1 und D11, die erfindungsgemäß mittels Integration der Spannungen U$^+$ und U$^-$ erzeugt werden.

Figurenbeschreibung

Im Folgenden ist die Erfindung an Hand von mehreren nicht einschränkenden Ausführungsbeispielen näher erläutert. Es zeigt

Fig. 1 einen prinzipiellen Aufbau eines leistungselektronischen Trennverstärkers,

Fig. 2 die Problematik des Wanderns des Magnetisierungsstromes $i_m(t)$,

Fig. 3 schematisch den Aufbau eines erfindungsgemäßen Wechselrichtertrennverstärkers,

Fig.4a schematisch den Aufbau eines erfindungsgemäßen Pulsdauermodulators 4', wobei die Impulse von z(t) mit dem Signal am sync-Eingang gestartet werden, in einer bipolaren Ausführung,

Fig.4b schematisch den Aufbau eines erfindungsgemäßen Pulsdauermodulators 4', wobei die Impulse von z(t) mit dem Signal am sync-Eingang gestartet werden, in einer unipolaren Ausführung,

Fig. 5 den zeitlichen Ablauf zur Erzeugung einer Primärspannung $u_p$ mit dem PDM 4' aus Figur 4a,

Fig. 6a schematisch der Aufbau eines erfindungsgemäßen Pulsweitenmodulators 4" mit dreieckförmiger Hilfsspannung $u_h$, bipolar,

Fig. 6b schematisch der Aufbau eines erfindungsgemäßen Pulsweitenmodulators 4" mit dreieckförmiger Hilfsspannung $u_h$, unipolar,

Fig. 7 den zeitlichen Ablauf zur Erzeugung einer Primärspannung $|u_p|$ mit dem PWM 4" aus Figur 6b.

**Fig.1** zeigt einen prinzipiellen Aufbau eines leistungselektronischen Trennverstärkers zur Signalverstärkung einer Sollspannung $u_{out,soll}(t)$ zur Steuerung einer Last bzw. eines Lastprozesses 3, in welchem eine Spannung $u_{out}$ auftritt. Dazu werden diese beiden Spannungen $u_{out,soll}(t)$, $u_{out}$ an jeweils einen Eingang eines Reglers/Begrenzers 13 geführt, der eine Steuerspannung $u_s(t)$ ausgibt. Die Steuerspannung $u_s(t)$ wird einem Pulsweitenmodulator 4 zugeführt. Der Pulsweitenmodulator 4 verschneidet die Steuerspannung mit einer periodischen Hilfsspannung $u_h(t)$ und gibt einen Signalzug z(t) aus. Der Ausgang des PWM 4 ist mit dem Eingang eines Wechselrichterverstärkers 1 verbunden, der die unipolaren Impulse des Impulszuges z(t) abwechselnd in positiver und negativer Richtung zu einer Transformatorprimärspannung $u_p(t)$ verstärkt. An einen Ausgang des Wechselrichterverstärkers 1 ist eine Primärseite eines Transformators 2 angeschlossen, und an einer Sekundärseite von Transformator 2 ist die Last 3 angeschlossen. Die Sekundärspannung $u_2(t)$ des Transformators 2 ist durch $ü·u_p(t)$ bestimmt, wobei die Spannung $u_p(t)$ von dem Wechselrichterverstärker 1 ausgegeben wird und ü als Verhältnis ü = N2/N1 der Windungszahlen N2 der Sekundärspule und der Windungszahlen N1 der Primärspule des Transformators 2 definiert ist. Ein Steuerspannungswert $u_{s,i}$ entspricht dabei der Energie, die in einer Taktperiode $T_i$ bzw. mit einem positiven oder negativen Primärspannungsimpuls $u_{p,i}$ über den Transformator 2 übertragen wird. Um diese Energiemenge zu regeln, werden die Sekundärspannung $u_2$ und der Sekundärstrom $i_2$ des Transformators bzw. die Ausgangsspannung $u_{out}$ und der Ausgangsstrom iout nach z.B. Gleichrichtung und Filterung der Sekundärspannung an den Eingängen des Reglers/Begrenzers 13 angeschlossen. Der Regler/Begrenzer 13 gibt an einem Ausgang die Energiemenge mit einer leistungsschwachen Steuerspannung $u_s(t)$ an den Eingang von PWM 4, wodurch der leistungsstarke Verbraucherprozess Last 3 gesteuert wird.

Je nach Betriebszustand gibt Regler/Begrenzer 13 eine Steuerspannung $u_s(t)$ aus, mit welcher die Größe Ausgangsspannung $u_{out}$ geregelt oder Ausgangsstrom $i_{out}$ begrenzt werden soll. Dazu wird der Primärstrom $i_1(t)$ an den Regler/Begrenzer zurückgeführt und $u_s(t)$ nur langsam, d.h. über mehrere hundert Taktperioden hinweg, auf einen neuen Wert eingestellt, damit ein nur ungefährliches Überschreiten der Sättigungsgrenze des Transformators und eine anschließende Pulskorrektur erfolgen kann.

Eine schnellere Einstellung der Pulsbreite würde zu einem Sättigungskurzschluss und in Folge zu einer Notabschaltung führen, da sich der Transformator entmagnetisieren und der stark beanspruchte Leistungsschalter abkühlen muss.

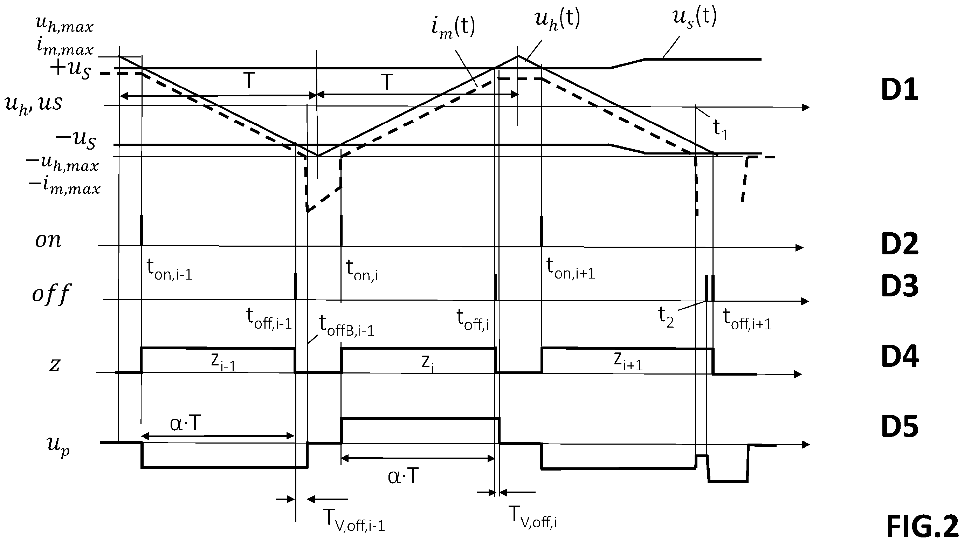

**Fig.2** zeigt die Problematik, weshalb der Magnetisierungsstrom $i_m(t)$ wandert und größere Änderungen des Tastverhältnisses bzw. der Spannungsimpulsdauern gefährlich sind. Konkret zeigt **Fig.2** bei einem bekannten Pulsweitenmodulator 4 die zeitlichen Verläufe von Steuerspannung $+u_s$ und invertierter Steuerspannung $-u_s$ und Hilfsspannung $u_h(t)$ (D1), den Signalen on (D2) und off (D3), Impulszug $z(t)$ (D4) und der vom Wechselrichterverstärker 1 aufgrund von Signal z erzeugten Primärspannung $u_p(t)$ (D5). Wenn i-1 gerade angenommen wird, sind die Impulse von $u_p$ zufolge ungerader $z_i$ negativ, zufolge gerader $z_i$ positiv.

Befindet sich die Hilfsspannung $u_h(t)$ in einem Bereich, der durch $+u_s$ und $-u_s$ festgelegt ist, ist $z(t)=1$, befindet sich die Hilfsspannung außerhalb dieses Bereiches, ist $z(t)=0$. Wenn während der fallenden Flanke der Hilfsspannung $u_h(t)$ Signal $z(t)=1$ ist, wird ein negativer Impuls $u_p(t)=-U$ erzeugt, ist $z(t)=1$ während der steigenden Flanke der Hilfsspannung $u_h(t)$, legt der Wechselrichterverstärker 1 die Versorgungsspannung in positiver Richtung $u_p(t)=+U$ an den Transformator. Die Belastung bzw. der Sekundärstrom $i_2$ wirkt bei symmetrischer Belastung symmetrierend auf die Magnetisierung des Transformators. Im Leerlauf bei $i_2(t)=0$ wird vom Transformator lediglich der Magnetisierungsstrom $i_m(t)$ aufgenommen.

Der Magnetisierungsstrom $i_m(t)$, in D1 strichliert eingetragen, nimmt den im Signal $i_m(t)$ nachgebildeten Verlauf. Dieser Verlauf sollte während den Impulsen von $u_p(t)$ (D5) zeitlich etwas verzögert dem Verlauf der Hilfsspannung $u_h(t)$ (D1) folgen, weicht jedoch mit der Zeit ab.

Es ist hier der Fall dargestellt, dass der Wechselrichterverstärker 1 die Verstärkung eines Impulses von $z(t)$ auf die Spannung $+U$ oder $-U$ unverzögert vornimmt, Wechselrichter 1 die negative Spannung $-U$ aber nach einer Verzögerungszeit $T_{voff,i-1}$ abschaltet, die positive Spannung $+U$ nach der Verzögerungszeit $T_{v,off,i}$ abschaltet, wobei die Verzögerungszeit $T_{v,off,i-1}$ größer als $T_{v,off,i}$ ist. Die Impulse von Impulszug $z(t)$ weisen die Dauern $\alpha \cdot T = t_{off,i} - t_{on,i}$ auf. Die negativen Impulse von $u_p(t)$ weisen die Dauern $\alpha \cdot T + T_{v,off,i-1}$ auf, während die positiven Impulse von $u_p(t)$ die kürzeren Dauern $\alpha \cdot T + T_{v,off,i}$ aufweisen, mit $\alpha = u_s/u_{h,max}$, weshalb der Magnetisierungsstrom $i_m(t)$ in die negative Richtung wandert.

Kurz vor dem Zeitpunkt $t_{offB}$ hat der Magnetisierungsstrom im seinen negativen Maximalwert erreicht.

Die Sättigungserscheinung beginnt kurz vor Zeitpunkt $t_{offB,i-1}$. Die Hauptinduktivität von Transformator 2 wird 0, es wirkt nur mehr eine kleine Streuinduktivität. Der Magnetisierungsstrom steigt rapide an, wird jedoch im regulären Betrieb rechtzeitig zu einem Zeitpunkt $t_{offB,i-1}$ abgeschaltet. Die Sättigungserscheinung endet spätestens kurz nach der folgenden Einschaltung des positiven Spannungsimpulses von $u_p$ zum Zeitpunkt $t_{on,i}$. Erreicht der Magnetisierungsstrom wieder den Wert $-i_{m,max}$, wird wieder die Hauptinduktivität wirksam.

Zu den Zeitpunkten $t_{offB}$ der negativen Impulse von $u_p$ liegt ein wesentlich größerer Spitzenwert des Magnetisierungsstroms erfasst, als bei den positiven. Es bleibt genügend Zeit, um die folgenden Steuerimpulse von z für die positiven Impulse von $u_p$ kleinweise zu vergrößern und/oder jene für die negativen Impulse von $u_p$ zu verkürzen, bis die Sättigungserscheinung am Ende der negativen Impulse von $u_p$ verschwindet.

Wenn nun $i_m(t)$ in die negative Richtung gewandert ist, bis zu einem Zeitpunkt $t_{offB,i-1}$ der Grenzwert $-i_{m,max}$ erreicht ist, so bewirkt die zu dynamische Änderung der Steuerspannung $u_s(t)$ während des Impulses $z_{i+1}$, dass der Magnetisierungsstrom $i_m$ bereits zum Zeitpunkt $t_1$ den Grenzwert $-i_{m,max}$ erreicht. Der eintretende Kurzschluss wird nicht von Impuls $z_{i+1}$ abgeschaltet, sondern bildet sich voll aus und löst zum Zeitpunkt $t_2$ eine Notabschaltung aus. Der Betrieb muss vorübergehend eingestellt werden, bis sich der Transformator wieder entmagnetisiert und der Wechselrichter abgekühlt hat.

Ziel der Erfindung ist es, das Wandern des Magnetisierungsstroms mit einem neuen Pulsweiten/Pulsdauermodulationsverfahren zu verhindern und eine dynamische Regelung zu ermöglichen. Dies geschieht, indem der Verlauf des Magnetisierungsstroms $i_m(t)$ mittels Integration der Primärspannung $u_p$ nachgebildet und auch bei dynamischen Änderungen der Steuerspannung ein zur Nulllinie weitgehend symmetrischer Verlauf von $i_m(t)$ vorgegeben wird.

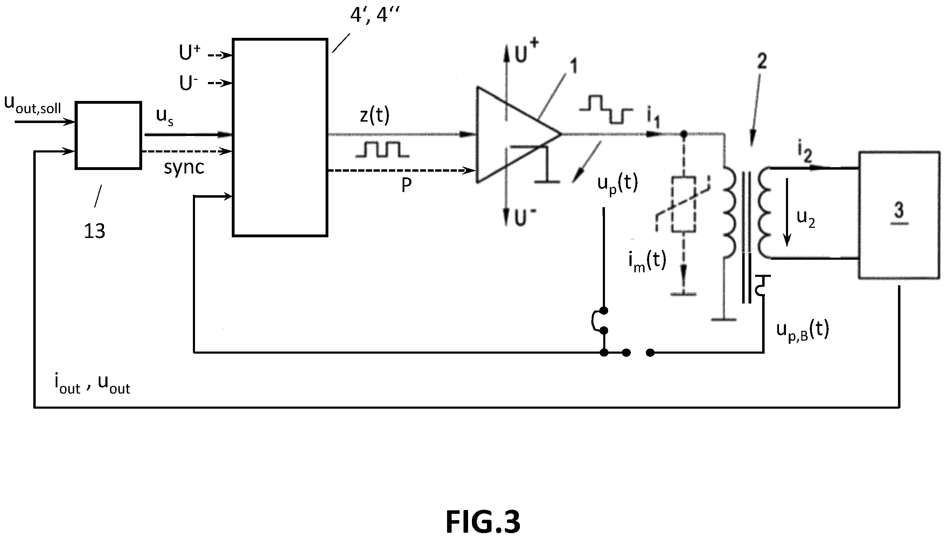

**Fig.3** zeigt schematisch den Aufbau eines erfindungsgemäßen Wechselrichtertrennverstärkers. Unterschiedlich zu Fig.1 wird nicht der Primärstrom $i_1$ an Regler 13, sondern die Primärspannung $u_p$ an den erfindungsgemäßen Pulsmodulator 4', 4" geführt. Alternativ kann auch eine sogenannte rückgekoppelte Transformatorprimärspannung $u_{p,B}(t)$ an den erfindungsgemäßen Pulsmodulator 4', 4" geführt werden. Punktiert eingetragen ist das sync-Signal, das im Falle des Pulsdauermodulators 4' an dessen Eingang benötigt wird. Ebenfalls punktiert sind ein weiteres Signal P eingezeichnet, das von 4' oder 4" ausgegeben werden kann, sowie zwei weitere Eingänge von 4', 4" für die Versorgungsspannungen $U^+$, $U^-$. Diese Signale werden bei einem beispielhaften erfindungsgemäßen Vorgehen benötigt, wenn $m(t)$ aus $u_h(t)$ abgeleitet wird und der Transformator auch bei unterschiedlichen und veränderlichen Versorgungsspannungen $U^+$, $U^-$, voll ausgenützt werden soll.

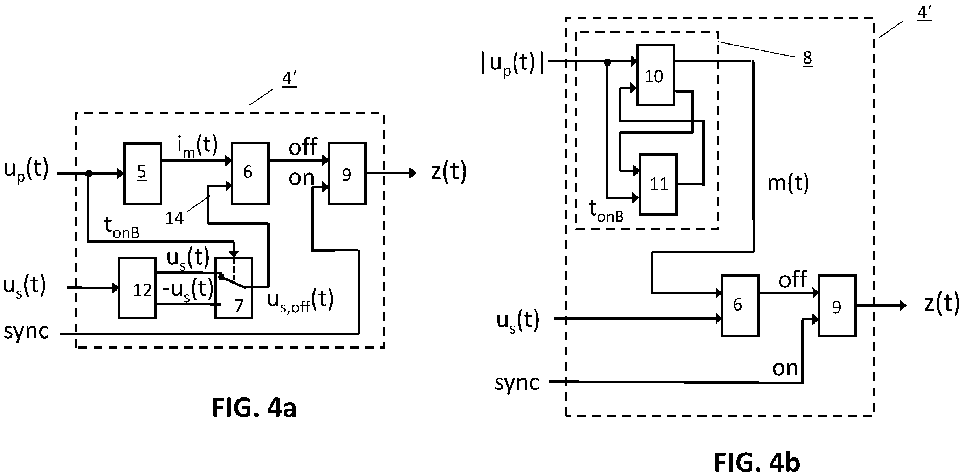

In **Fig.4** sind erfindungsgemäße Pulsdauermodulatoren PDM 4' schematisch dargestellt. Ein PDM 4' wird extern gestartet mit dem sync-Signal und gibt daraufhin einen Impuls von $z(t)$ aus, dessen Dauer der Steuerspannung $u_s(t)$ (bei Impulsende) an einem zweiten Eingang entspricht.

**Fig. 4a** zeigt eine bipolare Ausführungsform. Am dritten Eingang von PDM 4' ist die Primärspannung $u_p(t)$ oder

eine proportionale Größe angeschlossen. Durch $z(t)=0$ ist auch die Primärspannung $u_p(t)=0$. Aufgrund $z(t)=1$ wird die Versorgungsspannung $U$ oder $-U$ an den Transformator gelegt. Diese Spannung $u_p(t)$ oder eine proportionale Größe ist an den Eingang von Integrator 5 geführt. Integrator 5 gibt das Signal $i_m(t)$ aus. Ist $u_p(t) = 0$, bleibt $i_m(t)$ konstant, ist $u_p(t)=U$, steigt $i_m(t)$ linear an, und ist $u_p(t)=-U$, nimmt $i_m(t)$ linear ab.

Der Impulszug $z(t)$ wird von einem RS-FlipFlop 9 ausgegeben. RS-FlipFlop 9 wird durch das on-Signal gesetzt, sein Setzeingang ist an den sync-Eingang von PDM 4'angeschlossen, An den Rücksetzeingang R ist der Ausgang von Komperator 6 bzw. das off-Signal geführt. An einen Eingang von Komperator 6 ist zur Bestimmung des Tastverhältnisses der Ausgang von Integrator 5, d.h. das Signal $i_m(t)$, geführt. An den zweiten Eingang von Komperator 6 ist Signal $u_{s,off}(t)$, erzeugt von Umschalter 7, geführt. Umschalter 7 schaltet abhängig vom Steuereingang eine der von Mischer 12 erzeugten Spannungen, entweder die positive oder die negative Steuerspannung $u_s(t)$, an seinen Ausgang. An den Steuereingang von Umschalter 7 ist die Primärspannung $u_p(t)$ angeschlossen.

**Fig. 4b** zeigt eine unipolare Ausführungsform eines PDM 4'. PDM 4' weist die Eingänge sync, $u_s$ und $u_p$ und den Ausgang z auf.

Signal z wird von RS FF 9 ausgegeben. Die von Zustand $z=1$ wird durch die Signale on und off festgelegt. Mittels der on-Nadeln vom sync-Eingang des PDM 4' wird das RS FF 9 gesetzt, durch die off-Nadeln von Komperator 6 wieder zurückgesetzt.

An einen Eingang von Komperator 6 ist das von Betragsintegrator 8 erzeugte Signal m geführt. Der Betragsintegrator 8 besteht aus einem Integrator 10 und RS-FlipFlop 11. Integrator 10 weist den Signaleingang auf, an den das Signal $|u_p|$ angeschlossen ist, und einen Steuereingang. Ist der Steuereingang 1, wird das Signal am Signaleingang in positiver Richtung integriert, ist der Steuereingang mit 0 verbunden, wird Signal $|u_p|$ in negativer Richtung bzw $-|u_p|$ integriert.

Der Steuereingang von Integrator 10 ist mit dem Ausgang von FF 11 verbunden.

Der Setzeingang von FF11 ist an einen zweiten Ausgang von Integrator 10 angeschlossen. Dieser Ausgang wird nur 1, wenn das Ausgangssignal m von Integrator 11 $m(t)=0$ ist. Vom Ausgangszustand $mo=0$ integriert Betragsintegrator 8 in die positive Richtung.

Die Rücksetzung von FF11 erfolgt jeweils bei der Einschaltung eines Impulses bzw. zu den Zeitpunkten $t_{onB}$, wenn $u_p(t)$ auf $U$ oder $-U$ geschaltet wird, bzw. bei den steigenden Flanken von Signal $|u_p|$.

An den zweiten Eingang von Komperator 6 ist die Steuerspannung $u_s(t)$ geführt. Bei einem Impulsstart von $u_p(t)$ wird FF11 zurückgesetzt. Integrator 8 integriert abwärts bis auf den Wert 0 und automatisch weiter in die positive Richtung, über die Abschaltung von $u_p$ hinaus, bis zur neuerlichen Rücksetzung beim Start des folgenden Impulses von $u_p$.

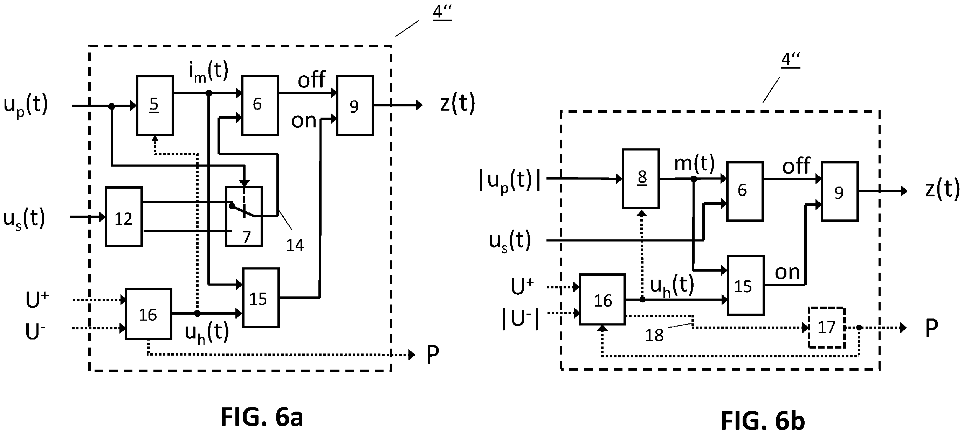

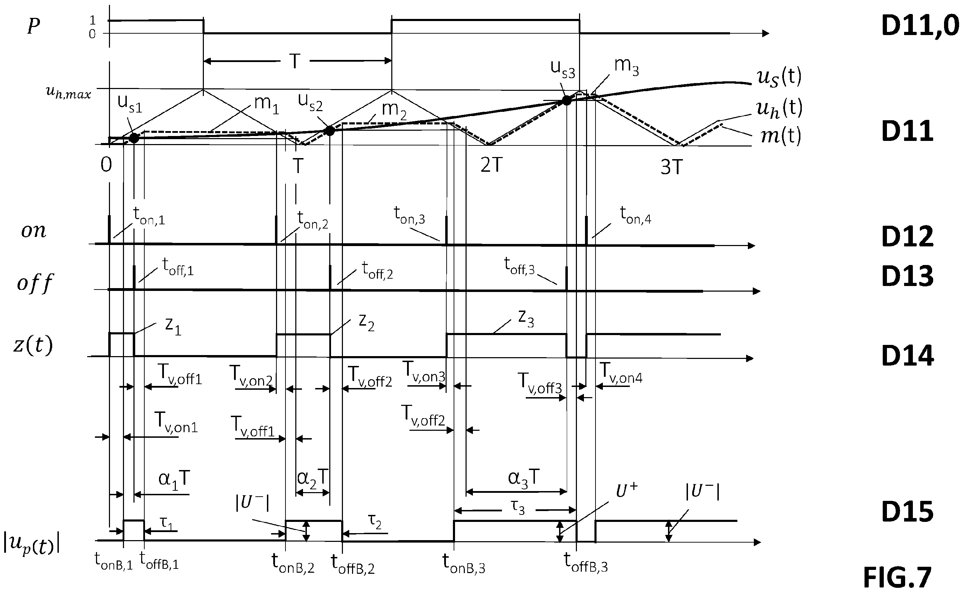

Der unipolar ausgeführte PDM 4' ergänzt mit einem Generator des on-Signals ergibt den unipolar ausgeführten PWM 4" in Fig.6b. Die zeitlichen Verläufe der Signale in PDM 4' können Fig.7 entnommen werden.

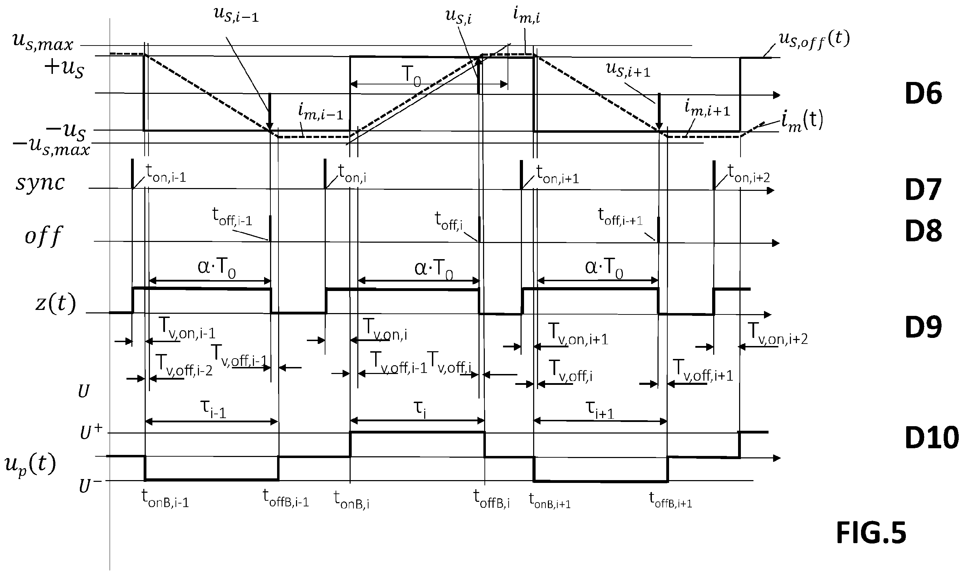

**Fig.5** zeigt den zeitlichen Verlauf der in Pulsdauermodulator 4' gemäß Fig.4a verarbeiteten und erzeugten (bipolaren) Signale.

Umschalter 7 registriert die Abschaltung der Primärspannung $u_p(t)$ von $+U$ oder $-U$ auf 0 und gibt für $u_{s,off}(t)$ die Steuerspannung $u_s(t)$ aus, wenn $-U$ abgeschaltet wurde und $-u_s(t)$, nach einer Abschaltung von $U$.

Die Einschaltung eines Steuerimpulses von $z(t)$ (D9) wird durch das sync-Signal (D7) vorgegeben.

Ausgangssignal z (D9) erzeugt eine Primärspannung $u_p(t)$ (D10), wobei deren Dauern der positiven (gerade i) und negativen (ungerade i) Impulse

$$\tau_i = [(i_{m,i-1}+i_{m,i})/(2\ u_{s,max})] \cdot T_0 = [(u_{s,i-1}+u_{s,i})/(2\ u_{s,max})]\cdot T_0+T_{v,off,i-1}+T_{v,off,i} \text{ betragen.}$$

Die Steuerwerte $u_{si}$ stehen spätestens zu den Zeitpunkten $t_{off,i}$ fest und betragen $u_{s,i} = |u_{s,off}(t_{off,i})|$.

Der Term $(u_{s,i-1}+u_{s,i})/(2\ u_{s,max})$ ist das Tastverhältnis $\alpha$. $T_0$ ist die Zeit für die maximale Impulsdauer bei $u_s = u_{s,max}$. Der Transformator wird so dimensioniert, dass er bei maximaler Pulsdauer von $u_p$ gerade nicht sättigt, Signal im darf den Wert $u_{s,max}$ nicht überschreiten.

Die Abstände der on-Nadeln am sync-Eingang sind vorzugsweise größer als $T_0$.

Diagramm D6 zeigt die Signale $u_{s,off}(t)$ und $i_m(t)$ an Komperator 6. Umschalter 7 legt zu einem Zeitpunkt $t_{onB,i}$ die Steuerspannung $u_s(t)$ auf Leitung 14, wenn ein positiver Impuls $u_p=U$ eingeschaltet wird, und die invertierte Steuerspannung $-u_s(t)$ bei der Einschaltung eines negativen Impulses von Signal $u_p(t)$. Das trapezförmige Signal $i_m(t)$ steigt während der positiven Impulse von $u_p$ linear an bis es $u_s(t)$ erreicht und nimmt während der negativen Impulse von $u_p$ linear ab, bis $-u_s(t)$ erreicht wird.

Zum Zeitpunkt $t_{off,i-1}$ bei $i_m(t_{off,i-1}) = -u_{s,i-1}$, erzeugt Komparator 6 (Fig.4a) die off-Nadel, Diagramm D8, wodurch RS-FlipFlop 9 rückgesetzt bzw. $z(t)$ in den Zustand 0 geschaltet wird.

Die Verzögerungszeit $T_{v,off,i-1}$ später zum Zeitpunkt $t_{offB,i-1}$ erfolgt die Umschaltung von $u_p(t)$ von $-U$ auf 0.

Das Ausgangssignal $i_m(t)$ von Integrator 5 bleibt ab diesem Zeitpunkt auf dem negativen Wert $i_{m,i-1} = i_m(t_{offB,i-1})$ stehen.

Zum Zeitpunkt $t_{on,i}$ startet mit der Setzung von RS-FlipFlop 9, Signal $z(t)$ wird 1, der Vorgang für den positiven Impuls von $u_p$. Zum Zeitpunkt $t_{onB,i} = t_{on,i}+T_{v,on,i}$ erfolgt die Änderung von $u_p(t)$ von 0 auf $+U$ und die Umschaltung von Leitung 14 auf das Signal $us(t)$.

Integrator 5 integriert aufwärts bzw. $U$, $i_m$ steigt linear an, und erreicht zum Zeitpunkt $t_{onB}+ T_{v,off,i-1}$ wieder den Wert $-u_{s,i-1}$. Bei $i_m(t_{off,i}) = u_{s,i}$ spricht Komparator 6 (Fig.4) an und schaltet $z(t)$ in den Zustand 0 zurück.

Vom Zeitpunkt $t_{onB,i}+T_{v,off,i-1}$ bis zum Zeitpunkt $t_{off,i}$ ändert Signal $i_m(t)$ seinen Wert von $-u_{s,i-1}$ auf $+u_{s,i}$. Diese Zeitspanne beträgt $\alpha_i T_0$.

Die Dauern der Steuerimpulse $z$ für die Spannungsimpulse von $u_p$ ergeben sich zu

$$\alpha_i T_0+T_{v,on,i}+T_{v,off,i-1}.$$

Die Dauern der erfindungsgemäß erzeugten Spannungsimpulse von $u_p$ betragen

$$T_i=\alpha_i T_0+T_{v,off,i-1}+T_{v,off,i}.$$

Signal $z(t)$ wird ein Jitter aufgeprägt, insbesondere die Einschaltverzögerungen ($T_{v,on}$). Die Einschaltverzögerungen bewirken lediglich eine Verzögerung vom Start des Vorgangs und haben keinen Einfluss auf die Dauer der generierten Spannungsimpulse von $u_p$.

Die Ausschaltverzögerungen ($T_{v,off,i}$) bewirken lediglich eine geringfügige Vergrößerung der Impulse von $u_p$, die von Regler 13 (Fig.3) ausgeglichen wird.

**Fig.6a** zeigt das Schaltbild für einen erfindungsgemäßen Pulsweitenmodulator 4". PWM 4" setzt im Signalzug $z(t)$ die Steuerspannung $u_s$ laufend in ein Tastverhältnis $\alpha_i$ um, wobei die Zustände $z_i=1$ annähernd die Dauern $\alpha_i \cdot T$ aufweisen, wobei $\alpha_i \approx (u_{si-1}+u_{si})/(2u_{h,max})$ ist, und die Taktperiode $T$ von einer (bipolaren) dreieckförmigen Hilfsspannung $u_h$ vorgegeben wird.

PWM 4" weist die Eingänge $u_s$ und $u_p$ und den Ausgang $z$ auf. Eingang $u_p$ ist an den Eingang von Integrator 5 geführt, der Signal $i_m$ ausgibt.

Signal $z$ wird von RS FF 9 ausgegeben. In einem Taktintervall $T$ wird die ungefähre Dauer $\alpha_i \cdot T$ von Zustand $z=1$ durch die Signale on und off festgelegt. Mittels der on-Nadeln vom Ausgang von Komperator 15 wird das RS FF 9 gesetzt, durch die off-Nadeln von Komperator 6 wieder zurückgesetzt, usw. An einen Eingang von Komperator 6 und Komperator 15 ist jeweils das Signal $i_m$ geführt.

An den zweiten Eingang von Komperator 15 ist der Ausgang von Dreieckgenerator 16 angeschlossen.

Dreieckgenerator 16 gibt die bipolare Hilfsspannung $u_h$ aus. Während der fallenden Flanke von $u_h$ nimmt $u_h$ von $u_{h,max}$ auf $u_{h,min}$ ab, während der steigenden Flanke von $u_h$ steigt $u_h$ von $u_{h,min}$ auf $u_{h,max}$ an. Die Taktperioden $T$ für die positiven Impulse von $u_p$ ($u_p=U$) ist durch die Dauer der steigenden Flanken und die Taktperioden $T$ für die negativen Impulse von $u_p$ ($u_p=-U$) ist durch die Dauer der fallenden Flanken von $u_h$ vorgegeben.

Komperator 15 erzeugt eine on-Nadel zum Zeitpunkt der Gleichheit seiner Eingangssignale $im$ und $u_h$.

Signal $u_P$ wird an den Steuereingang von Umschalter 7 geführt. An die Signaleingänge von Umschalter 7 ist jeweils ein Ausgang von Mischer 12 angeschlossen. Mischer 12 erhält Signal $u_s(t)$ vom Steuerspannungseingang des PWM 4" und gibt an einem Ausgang $u_s(t)$ am zweiten Ausgang $-u_s(t)$ aus. Umschalter 7 legt nach Abschaltung eines negativen Impulses von $u_p=-U$ die positive Steuerspannung $+u_s(t)$ an seinen Ausgang $u_{s,off}(t)$, nach Abschaltung eines positiven Impulses von $u_p=U$ die invertierte Steuerspannung $-u_s(t)$. Leitung 14 verbindet den zweiten Eingang von Komperator 6 mit dem Ausgang $u_{s,off}(t)$ von Umschalter 7.

Komperator 6 erzeugt die off-Nadel, wenn $i_m$ zufolge $u_p=U$ oder $u_p=-U$ auf $+u_s$ angewachsen oder auf $-u_s$ gefallen ist, bei Gleichheit seiner Eingangssignale $u_{s,off}$ und $im$.

Punktiert eingezeichnet sind die Eingänge U+ und U- von Generator 16. Dabei wird Generator 16 als selbstgesteuerter Integrator ausgeführt, der seinen Eingang auf U-schaltet, wenn sein Ausgang $u_h(t)=u_{h,max}$ erreicht hat, und seinen Eingang auf U+ schaltet, wenn sein Ausgang $u_h(t)=-u_{h,max}$ erreicht hat. Hilfsspannungsgenerator 16 gibt ein weiteres Signal P aus, P=1 während der steigenden Flanken von $u_h$ und P=0 während der fallenden, sodass Wechselrichter 1 bei P=1 $z(t)=1$ auf $u_p(t)=U^+$ und bei P=0 $z(t)=1$ zu $u_p(t)=$ U- verstärkt.

Diese Vorgehensweise ist im Detail aus der unipolaren Ausführungsform (Figs. 6b, 7) zu ersehen, worin der Fall dargestellt ist, dass die positiven und negativen Impulse der Primärspannung $u_p(t)$ die gleichen Amplituden U+=-U- aufweisen.

Vorteilhaft wird der Transformator auch bei unterschiedlichen und/oder zeitlich veränderlichen, eventuell störungsbehafteten positiven und negativen Versorgungsspannungen voll ausgenützt bzw. wird eine Primärspannung $u_p(t)$ erzeugt, die auch unter diesen Umständen einen weitgehend symmetrischen Verlauf des Magnetisierungsstroms gewährleistet.

Punktiert eingezeichnet ist die Verbindung vom Ausgang des Dreieckgenerators 16 mit einem weiteren Eingang von Integrator 5. Der analoge zeitliche Ablauf (Einschaltung von z bei $u_h=m_{i-1}$, $m_{i-1}= m(t_{offB,i-1})$, Ausschaltung von z bei $m_i=u_{s,i}$) wird für die unipolaren Signalverläufe der Ausführungsform in Fig.6b beschrieben.

**Fig.6b** zeigt das Schaltbild für einen erfindungsgemäßen Pulsweitenmodulator 4" in unipolarer Ausführung. PWM 4" setzt im Signalzug z(t) die Steuerspannung $u_s$ laufend in ein Tastverhältnis $\alpha_i$ um, wobei die Zustände $z_i=1$ annähernd die Dauern $\alpha_i\cdot T$ aufweisen und die Taktperiode T von einer unipolaren Hilfsspannung $u_h(t)$ vorgegeben wird.

Der unipolare PWM 4" weist die Eingänge $u_s$ und $|u_p|$ und den Ausgang z auf. Der Eingang für das Signal $|u_p|$ ist an den Eingang von Betragsintegrator 8 geführt, der das Signal m ausgibt.

Signal z wird von RS FF 9 ausgegeben. In einem Taktintervall T wird die ungefähre Dauer $\alpha\cdot T$ von Zustand z=1 durch die Signale on und off festgelegt. Mittels der on-Nadeln vom Ausgang von Komperator 15 wird das RS FF 9 gesetzt, durch die off-Nadeln von Komperator 6 wieder zurückgesetzt.

An einen Eingang von Komperator 6 und Komperator 15 ist jeweils das Signal m geführt.

An den zweiten Eingang von Komperator 15 ist der Ausgang von Dreieckgenerator 16 angeschlossen. Dreieckgenerator 16 erzeugt die periodische Hilfsspannung $u_h(t)$. An den zweiten Eingang von Komperator 6 ist die Steuerspannung $u_s(t)$ geführt.

Punktiert eingezeichnet sind die Eingänge U+ und U- von Generator 16, sowie ein weiterer Ausgang, der mittels Leitung 18 mit dem Eingang von Toggle FlipFlop 17 verbunden ist. Generator 16 ist in diesem Fall ein selbstgesteuerter Integrator, der vom Wert $u_{h,max}$ ab- und ab $u_h(t)=0$ aufintegriert, bis sein Ausgang $u_h(t)$ wieder den Wert $u_{h,max}$ erreicht. Bei $u_h(t)=u_{h,max}$ gibt Hilfsspannungsgenerator 16 einen Nadelimpuls auf Leitung 18, FF17 ändert seinen Ausgangszustand, Signal P.

Ist Signal P=1, verstärkt Wechselrichter 1 den Impuls von z(t) zu einem Spannungsimpuls von $u_p(t)$ mit der Amplitude U+ und Generator 16 integriert seinen Eingang U+.

Ist Signal P=0, verstärkt Wechselrichter 1 den Impuls von z(t) zu einem Spannungsimpuls von $u_p(t)$ mit der Amplitude U- und Generator 16 integriert seinen Eingang |U-|.

Vorteilhaft wird der Transformator auch bei unterschiedlichen oder veränderlichen Versorgungsspannungen voll ausgenützt. Aus Fig.7 ist ersichtlich, dass, wenn U+<|U-|, die Taktintervalle in welchen P=1 ist, länger sind, als jene, worin P=0 vorliegt, und umgekehrt, und entsprechend unterschiedlich lange positive und negative Impulse von $u_p(t)$ erzeugt werden, die einen weitgehend symmetrischen Verlauf des Magnetisierungsstroms hervorrufen.

Punktiert eingezeichnet ist die Verbindung vom Ausgang des Dreieckgenerators 16 mit einem weiteren Eingang von Integrator 8. Fig.7 zeigt den zeitlichen Ablauf in PWM 4", worin Integrator 8 aus dem Betrag der Primärspannung $|u_p|$ und aus der Hilfsspannung $u_h(t)$ den trapezförmigen Verlauf der Magnetisierung $|i_m(t)|$ bzw ein zeitliches Integral über $u_p$ in seinem Ausgangssignal m(t) nachbildet. Vorteilhaft dabei muss Betragsintegrator 8 selbst keinen Integrator enthalten.

**Fig.7** zeigt den zeitlichen Ablauf zur Erzeugung einer Primärspannung $|u_b(t)|$ (Diagramm D15) mit PWM 4" aus Fig.6b unter Berücksichtigung unterschiedlicher Schaltverzögerungen $T_{v,on,i}$ von Wechselrichter 1 bei der Ein- und Ausschaltung der Spannungsimpulse von $|u_b(t)|$. Dargestellt ist ein schnelles Anfahren bzw. eine vom Wert Null stark anwachsende Steuerspannung $u_s(t)$ (D11).

Dargestellt in Diagramm D11,0 ist Signal P. Signal P gibt die Polarität des Spannungsimpulses von $u_p(t)$ vor, ob z(t)=1 zu $u_p(t+T_v)$=U+ (P=1) oder zu $u_p(t)$=U-(P=0) verstärkt wird.

Entsprechend weisen die Amplituden der Impulse von $|up(t)|$, Diagramm 15, abwechselnd die Werte U+ und U- auf.

Die maximale Transformatorausnützung (minimale Pulspausen) ergibt sich, wenn die Steigungen der Flanken des trapezförmigen Signals m mit denen der Hilfsspannung $u_h$ übereinstimmen.

Diagramm D11 zeigt die Signale an den Komperatoren 6 und 15, Signale $u_h$, $i_m$, $u_s$ zur Festlegung der Einschaltzeitpunkte (D12) und Ausschaltzeitpunkte (D13) der Steuerimpulse von z(t) (D14).

Signal $u_h(t)$ weist in einer Taktperiode T eine von einem Maximalwert auf Null fallende und eine von Null auf den Maximalwert steigende Flanke auf.

Komperator 15 erzeugt eine on-Nadel zum Zeitpunkt $t_{on,i}$, wenn während der fallenden Flanke der Hilfsspannung $u_h$ Gleichheit mit Signal m besteht, $u_h(t_{on,i})=m_{i-1}$.

Komperator 6 erzeugt die off-Nadel zu einem Zeitpunkt, wenn zufolge $|u_p|$=U Signal m den Wert 0 erreicht hat und wieder angewachsen ist, bis zur Gleichheit mit dem Signal $u_s(t)$, $m(t_{off,i})=u_{si}$, mit $u_{si}=u_s(t_{off,i})$.

Zu den Zeitpunkten $t_{on,i}$ (i= 1,2,3) der on-Nadeln (D12) wird der Zustand von z(t) (D14) von 0 auf 1 geändert und ein Vorgang gestartet. Im Zuge dieses Vorgangs wird der Zustand von z(t) wieder auf 0 zurückgesetzt bei der folgenden Nadel von Signal off zu den Zeitpunkten $t_{off,i}$ (i= 1,2,3) (D13).

Diagramm 15 zeigt die gleichgerichtete erzeugte Primärspannung $|u_p|$ mit den Umschaltzeitpunkten $t_{onB,i}$, $t_{offB,i}$, i=1,2,3.

Der Ausgangszustand ist $u_p=i_m=u_s=0$. Es liegt Gleichheit der Eingangssignale von Komperator 6 vor und Signal off=1. Flip-Flop 9 kann nicht gesetzt werden, folglich wird kein Signalzug z(t) erzeugt, z(t)=0. Überschreitet die Steuer-

spannung $u_s(t)$ einen minimalen Wert, kann RS FF9 durch das on-Signal gesetzt und ein Vorgang gestartet werden kann.

Zum Zeitpunkt t=0 bzw. $t_{on,1}$ entsteht die erste on-Nadel zum Zeitpunkt 0 worin $u_h(0)=m_0=0$ ist. Signal $z(t)$ wird 1. Eine Verzögerungszeit $T_{v,on1}$ später wird Transformator 2 von Wechselrichter 1 in positiv gezählter Richtung an die Versorgungsspannung U angeschlossen. Integrator 8 integriert in die positive Richtung, weil $m_0=0$ ist und durch seinen zweiten Ausgang FF11 gesetzt ist.

Signal $m(t)$ kann während des Impulses von $|u_p|=U$ aufgrund des Steuerimpulses $z_i$ durch $m(t)=u_h(t-T_{v,on,i})$ dargestellt werden.

Zu den Zeitpunkten $t_{off,i}$ i=1,2,3, besteht die Gleichheit $m(t_{off,i}) = u_{si}$, Komparator 6 gibt zu diesen Zeitpunkt eine off-Nadel aus, worauf $z(t)$ in den Zustand 0 geschaltet wird. Die Verzögerungszeit $T_{v,off1}$ später erfolgt die Umschaltung von $u_p(t)$ von U auf 0. Integrator 8 hat zum Zeitpunkt $t_{offB,1}=t_{off,1}+T_{v,off1}$ auf den Wert $m_1$ integriert.

Signal $m(t)$ bleibt in den Pulspausen während $|up|=0$ von $t_{offB,i-1}$ bis $t_{onB,i}$ annähernd konstant und ergibt sich bei dieser Vorgehensweise

$$m_1=u_h(t_{offB,1}-T_{v,on1})=u_h(t_{off,1}+T_{v,off1}-T_{v,on1}).$$

Integrator 8 gibt bis zum Zeitpunkt $t_{onB,2}$ für Signal $m(t)$ den Wert $m_1$ aus.

Die Hilfsspannung $u_h(t)$ steigt indessen weiter, erreicht zum Zeitpunkt 0,5T den Maximalwert $u_{h,max}$, worauf das zweite Taktintervall beginnt,

Die Änderung des Zustands von $z(t)$ von 0 auf 1 erfolgt bei fallender Flanke von $u_h$ zum Zeitpunkt $t_{on,2}$, bei $u_h(t_{on,2}) = m_1$.

Die daraufhin erfolgende Umschaltung von $u_p(t)$ von 0 auf -U findet zum Zeitpunkt $t_{onB,2}$ (=$t_{on,2}+ T_{v,on2}$-) statt. FF11 in Integrator 8 wird zurückgesetzt. Integrator 8 integriert in die negative Richtung.

Signal m ergibt sich in der zweiten Einschaltzeit von $|u_p|=U$ von $t_{onB,2}$ bis $t_{offB,2}$ zu $m(t)=u_h(t-T_{v,on2})$.

Zum Zeitpunkt $t_{onB,2}+T_{v,off1}$ erreicht Signal m wieder den Wert $u_{s1}$. Es beginnt der Zeitabschnitt des zweiten Impulses von $z(t)$, der vom Tastverhältnis

$$\alpha_2 = (u_{s1}+u_{s2})/2u_{h,max} \text{ bestimmt ist, mit } u_{si}=u_s(t_{off,i}),$$

und zum Zeitpunkt $t_{off,2}$ endet, bei Gleichheit von $m(t_{off,2})$ mit der Steuerspannung $u_{s2}$ zum Zeitpunkt $t_{off,2}$.

Die Dauer des zweiten Impulses von $z(t)$ von $t_{on,2}$ bis $t_{off,2}$ beträgt $T_{v,on2}+T_{v,off1}+\alpha_2 T$.

Die Abschaltung des zweiten (negativen) Impulses von $u_p$ erfolgt zum Zeitpunkt **$t_{offB,2}$** um die Zeitspanne $T_{v,off2}$- verzögert, $t_{offB,2} = t_{off,2}+T_{v,off2}$-. Ab Zeitpunkt $t_{offB,2}$ bis zur nächsten Einschaltung von $u_p(t)$ bleibt $m(t)$ auf dem Wert $m_2$. Signal $m(t)$ bleibt in der Pulspause von $t_{offB,2}$ bis $t_{onB,3}$ annähernd konstant und ergibt sich zu $m_2=u_h(t_{offB,2}-T_{v,on2})=u_h(t_{off,2}+T_{v,off2}-T_{v,on2})$.

Die Dauer des (negativen) zweiten Spannungsimpulses von $u_p(t)$ beträgt

$$\tau_2 = T_{v,off+1}+\alpha_2 T+ T_{v,off-2}, \text{ mit } u_{s2}=u_s(t_{off,2}),\ \alpha_2=(u_{s1}+u_{s2})/2u_{h,max}$$

Die Hilfsspannung $u_h(t)$ erreicht zum Zeitpunkt 1,5T den Maximalwert $u_{h,max}$, worauf das dritte Taktintervall beginnt, das den dritten Ablauf enthält. Wie bei der äquivalenten bipolaren Ausführung, betragen die Dauern der Steuerimpulse des Signalzugs z

$$t_{off,i} - t_{on,i} = T_{v,on,i}+T_{v,off,i-1}+ \alpha_i T$$

und die Dauern $\tau_i$ der erzeugten Spannungsimpulse von $|u_p|=U$

$$t_{offB,i}-t_{onB,i} = T_{v,off,i-1}+\alpha_i T +T_{v,off,i}.$$

**Fig.7** zeigt, wie eine dynamische Änderung der Steuerspannung erfindungsgemäß verarbeitet wird und große Unterschiede in der Dauer von aufeinanderfolgenden Spannungsimpulsen von $u_p(t)$ ermöglicht, wobei sich aufgrund von (jitterbehafteten) Schaltverzögerungen die Pulsdauern geringfügig so vergrößern, dass ein Wandern des Magnetisierungsstroms unterbunden wird.

Der Ablauf ist für eine bevorzugte Ausführungsform beschrieben, die den Transformator optimal ausnützt. Bei der beschriebenen Erzeugung des on-Signals mit einem Hilfsspannungsgenerator 16 treten minimale Pulspausen auf.

Die bevorzugte Ausführungsform benützt Generator 16 weiter dazu, Signal $u_p(t)$ zu integrieren, wozu die Umschaltzeitpunkte $t_{onB}$, $t_{offB}$ von $u_p(t)$ detektiert werden.

Die Erfindung wurde oben an Hand der Verwendung des Signals $u_p(t)$ näher erörtert. Alternativ kann die Erfindung auch unter Verwendung der sogenannten rückgekoppelten Transformatorprimärspannung $u_{p,B}(t)$ realisiert werden.

**Patentansprüche**

1. Verfahren zur Generierung abwechselnd positiver und negativer Spannungsimpulse einer Transformatorprimärspannung $u_p(t)$ der Höhe $U^+$ und $U^-$ aus einem von einer Steuerspannung $u_S(t)$ abgeleiteten Impulszug $z(t)$, **dadurch gekennzeichnet, dass** die Transformatorprimärspannung $u_p(t)$ erfasst und diese Transformatorprimärspannung zum Magnetisierungsstromsignal $i_m(t)$ integriert wird, welches

   - zunimmt, wenn $u_p(t)=U^+$, $U^+>0$, und
   - abnimmt, wenn $u_p(t)=U^-$, $U^-<0$, und
   - sich nicht ändert, wenn $u_p(t)=0$ ist,

   und eine Abschaltung der Impulse von $z(t)$ durch eine Verschneidung einer fallenden Flanke von $i_m(t)$ mit $-u_s(t)$ oder durch eine Verschneidung einer steigenden Flanke von $i_m(t)$ mit $u_s(t)$ festgelegt wird,
   oder
   die Transformatorprimärspannung zum Magnetisierungssignal $m(t)=|i_m(t)|$ integriert wird, wobei während eines Impulses $|u_b(t)|=U^+$ oder $|u_p(t)|=|U^-|$ in die negative Richtung integriert wird bis $m(t)=0$ und von da ab bis Impulsende wieder in die positive Richtung integriert wird, und die Abschaltung der Impulse von $z(t)$ bei Gleichheit von $m(t)=|i_m(t)|$ mit $u_s(t)$ erfolgt,
   oder wobei in den oben beschriebenen Schritten an Stelle der Transformatorprimärspannung $u_p(t)$ eine rückgekoppelte Transformatorprimärspannung $u_{p,B}(t)$ verwendet wird, welche beispielsweise an einer oder mehreren in Serie geschalteten Messwindungen um einen Transformatorkern ermittelt wird.

2. Verfahren nach Anspruch 1, **dadurch gekennzeichnet, dass** der Start eines Impulses von $z(t)$ mit einem on-Signal an einem sync-Eingang oder von einem internen sync-Generator (Frequenzgenerator) ausgelöst wird.

3. Verfahren nach Anspruch 1, **dadurch gekennzeichnet, dass** von einem Dreieckgenerator eine periodische Hilfsspannung $u_h(t)$ ausgegeben wird, wobei ein Taktintervall T durch eine fallende Flanke, in der $u_h(t)$ von $u_{h,max}$ auf 0 abnimmt und eine steigende Flanke, worin $u_h(t)$ von 0 auf $u_{h,max}$ ansteigt, festgelegt ist, und ein on-Signal, mit welchem der Start eines Impulses von $z(t)$ ausgelöst wird, durch Verschneidung der fallenden Flanke der Hilfsspannung $u_h(t)$ mit der Steuerspannung $u_s(t)$ gewonnen wird.

4. Verfahren nach Anspruch 3, **dadurch gekennzeichnet, dass** ein Generator (16) fallende und steigende Flanken der Hilfsspannung $u_h(t)$ und ein Signal P erzeugt, indem er in Taktintervallen, in welchen P=1 ist, mit dem Eingang $U^+$ und in den Taktintervallen, in welchem P=0 ist, mit den Eingang $|U^-|$ vom maximalen Ausgangswert $u_{h,max}$ in die negative Richtung bzw. die negative Spannung $-U^+$ oder $U^-$ integriert, und ab Erreichen von $u_h(t)=0$ in die positive Richtung bzw. die positive Spannung $U^+$ oder $|U^-|$ integriert, bis wieder $u_{h,max}$ erreicht ist und vorzugsweise mit einem Wechselrichter (1), Impulse $u_p(t)=U^+$ eingeschaltet werden, wenn P=1 und $u_p(t)=U^-$ eingeschaltet werden, wenn P=0 ist.

5. Verfahren nach Anspruch 1, **dadurch gekennzeichnet, dass,** vorzugsweise von einem Dreieckgenerator, eine periodische Hilfsspannung $u_h(t)$ ausgegeben wird, und ein Taktintervall T vorgegeben wird durch das alternierende Ansteigen der Hilfsspannung von $-u_{h,max}$ auf $+u_{h,max}$ und Abfallen von $u_{h,max}$ auf $-u_{h,max}$, und ein on-Signal, mit welchem der Start eines Impulses von $z(t)$ ausgelöst wird, durch Verschneidung einer fallenden Flanke der Hilfsspannung $u_h(t)$ mit der Steuerspannung $u_s(t)$ und durch Verschneidung einer steigenden Flanke der Hilfsspannung $u_h(t)$ mit der invertierten Steuerspannung $-u_s(t)$ gewonnen wird.

6. Verfahren nach Anspruch 5, **dadurch gekennzeichnet, dass** - vorzugsweise von einem Generator (16) - eine steigende Flanke einer Taktperiode der Hilfsspannung $u_h(t)$ mittels Integration, insbesondere von $-u_{h,max}$ auf $u_{h,max}$, der Versorgungsspannung $U^+$ erzeugt wird und eine fallende Flanke einer Taktperiode der Hilfsspannung $u_h(t)$

mittels Integration, insbesondere von $u_{h,max}$ auf $-u_{h,max}$, der Versorgungsspannung $U^-$ erzeugt wird, und ein zweites Signal P ausgegeben wird, wobei P=1 während der steigenden und P=0 während der fallenden Flanken von $u_h(t)$ ist, und, vorzugsweise mit einem Wechselrichter (1), Impulse $u_p(t)=U^+$ eingeschaltet werden, wenn P=1 und die Impulse $u_p(t)=U^-$ eingeschaltet werden, wenn P=0 ist.

7. Vorrichtung, insbesondere Wechselrichtertrennverstärker zum Durchführen eines Verfahrens nach einem der Ansprüche 1 bis 6.

8. Vorrichtung nach Anspruch 7, umfassend

- Versorgungsspannungen $U^+$ und $U^-$ oder eine Versorgungsspannung U, die durch Gleichrichtung einer Netzwechselspannung erzeugt werden können,
- einen Wechselrichterverstärker (1), angeschlossen an Masse, U+ und U-, wobei der Wechselrichterverstärker (1) alternativ als Umpoler, z.B. als Vollbrückenwechselrichter ausgeführt sein kann, der U abwechselnd in positiver und negativer Richtung ausgibt, mit einer Ausgangsgröße $u_p(t)$,
- einen Transformator (2), dessen Primärwicklung an den Ausgang $u_p(t)$ von Wechselrichter (1) angeschlossen ist,
- eine Last (3), die von einer Sekundärspannung ($u_2$) des Transformators (2) versorgt wird,
- Mittel zur Erfassung von Ausgangsgrößen $u_{out}$ und/oder iout,
- Mittel zur Erzeugung einer Sollspannung $u_{out,soll}$,
- einen Regler/Begrenzer 13, der aufgrund der Ausgangsgrößen $u_{out}$ und/oder $i_{out}$ und der Sollspannung $u_{out,soll}$ die Steuerspannung $u_s$ erzeugt,
- einen Modulator 4, dessen Ausgang z(t) von Wechselrichter 1 zur Primärspannung up(t) verstärkt wird, wobei die Vorrichtung enthält
- Mittel zur Erfassung einer Transformatorprimärspannung $u_p(t)$ und/oder einer rückgekoppelten Transformatorprimärspannung $u_{p,B}(t)$,
- sowie Mittel (5) zur Integration der Transformatorprimärspannung oder der rückgekoppelten Transformatorprimärspannung zum Magnetisierungsstromsignal $i_m(t)$, oder Mitteln (8) zur Integration der Transformatorprimärspannung oder der rückgekoppelten Transformatorprimärspannung zum Magnetisierungssignal $m(t)=|i_m(t)|$ ,und
einen Modulator 4 durch einen Pulsweiten- bzw. Pulsdauermodulator (4', 4"), gebildet ist.

9. Vorrichtung nach Anspruch 8, wobei die Mittel zur Integration (5, 8) Bestandteil des Pulsweiten- oder Pulsdauermodulators (4', 4") sind.

10. Modulator, insbesondere Pulsdauer- oder Pulsweitenmodulator, insbesondere zur Verwendung in einer Vorrichtung nach einem der Ansprüche 7 bis 9 sowie zur Verwendung in einem Verfahren nach einem der Ansprüche 1 bis 6.

11. Modulator (4', 4") nach Anspruch 10, umfassend Mittel zur Integration einer Transformatorprimärspannung zum Magnetisierungsstromsignal $i_m(t)$, etwa in Form eines Integrators (5), oder Mittel (8) zur Integration der Transformatorprimärspannung zum Magnetisierungssignal $m(t)=|i_m(t)|$, etwa in Form eines Integrators (8), wobei die Integration vorzugsweise in einem Hilfsspannungsgenerator (16) erfolgt.

12. Modulator (4', 4") nach Anspruch 10 oder 11, wobei während eines Impulses von $u_p(t)$ der Integrator (5) dazu eingerichtet ist, ein Signal $i_m(t) = u_{h,b}(t-T_{v,on})$ auszugeben oder der Integrator (8) dazu eingerichtet ist, ein Signal $m(t) = u_{h,u}(t-T_{v,on})$ auszugeben, wobei $-u_{h,max} < u_{h,b} < u_{h,max}$ und $0 < u_{h,u} < u_{h,max}$ und in einer Pulspause von $u_p(t)$ der Integrator (5) den Wert $i_m(t) = u_{h,b}(t_{v,off,B}-T_{v,on})$ oder der Integrator (8) den Wert $m(t) = u_{h,u}(t_{v,off,B}-T_{v,on})$ ausgibt.

Fig. 1

**FIG.2**

FIG.3

FIG. 4b

FIG. 4a

FIG.5

**FIG. 6a**

**FIG. 6b**

EP 3 840 203 A1

FIG.7

Europäisches
Patentamt

European
Patent Office

Office européen
des brevets

**EUROPÄISCHER RECHERCHENBERICHT**

Nummer der Anmeldung

EP 19 21 8597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 400 580 B1 (BOWMAN WAYNE C [US] ET AL) 4. Juni 2002 (2002-06-04) * Abbildungen 1,3,4 * * Spalte 5, Zeile 51 - Spalte 9, Zeile 55 * ----- | 1-12 | INV. H02M1/40 H02M3/335 |
| A | US 2018/048237 A1 (TSCHIRHART DARRYL [US] ET AL) 15. Februar 2018 (2018-02-15) * Abbildungen 1-13 * * Absätze [0026], [0038] * ----- | 1-12 | |

**RECHERCHIERTE SACHGEBIETE (IPC)**

H02M

Der vorliegende Recherchenbericht wurde für alle Patentansprüche erstellt

| Recherchenort | Abschlußdatum der Recherche | Prüfer |
|---|---|---|
| Den Haag | 26. Juni 2020 | Kail, Maximilian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 8597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2020

| Im Recherchenbericht angeführtes Patentdokument | Datum der Veröffentlichung | Mitglied(er) der Patentfamilie | Datum der Veröffentlichung |
|---|---|---|---|
| US 6400580 B1 | 04-06-2002 | KEINE | |
| US 2018048237 A1 | 15-02-2018 | CN 107733232 A<br>DE 102017118296 A1<br>US 9812971 B1<br>US 2018048237 A1 | 23-02-2018<br>15-02-2018<br>07-11-2017<br>15-02-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19634713
- EP 898360 A
- AT 511298
- EP 898360 B